# EUROPÄISCHE PATENTSCHRIFT

(11) **EP 3 717 542 B1**
(45) Veröffentlichungstag und Bekanntmachung des Hinweises auf die Patenterteilung: **16.03.2022**
(21) Anmeldenummer: 18811774.1
(22) Anmeldetag: 27.11.2018
(51) Int. Cl.: C08G 18/76, C08J 9/14, C08G 18/48, C08G 18/10, B65D 83/14, B65D 83/68, C08G 101/00

(54) **ZWEIKOMPONENTEN-AEROSOLDOSE**
TWO-COMPONENT AEROSOL CAN
FLACON AÉROSOL À DEUX COMPOSANTS

(30) Priorität: 27.11.2017 DE 102017127914
(43) Veröffentlichungstag der Anmeldung: 07.10.2020
(73) Patentinhaber: Sika Technology AG, 6340 Baar (CH)
(72) Erfinder: BÜRKLE, Jochen, 71711 Steinheim an der Murr (DE)
(74) Vertreter: Sika Patent Attorneys
(86) Internationale Anmeldenummer: PCT/EP2018/082637
(87) Internationale Veröffentlichungsnummer: WO 2019/102024

(56) Entgegenhaltungen:
- EP-A2- 0 111 089
- WO-A1-02/079291
- DE-U1-202009 013 510
- US-A1- 2002 153 633

## Beschreibung

Die Erfindung betrifft eine Zweikomponenten-Aerosoldose zur Ausbringung von Dicht- und Montageschäumen auf Basis von Isocyanaten mit einem äußeren Druckbehälter, der eine Prepolymerkomponente und ein Treibgas enthält, wobei der äußere Druckbehälter mit einer ersten Ventileinrichtung und einem ersten Kanal verbunden ist, einem inneren Behälter, der eine Härterkomponente und ein Treibgas enthält, wobei der innere Behälter mit einer zweiten Ventileinrichtung und einem zweiten Kanal verbunden ist, und einem Sprühkopf, der einer Einrichtung zur simultanen Betätigung der ersten und zweiten Ventileinrichtung aufweist, sowie einem Sprührohr, in das der erste und zweite Kanal gemeinsam einmündet.

Zweikomponenten-Druckdosen zur Ausbringung von Dicht- und Montageschäumen sind in einer Vielzahl von Ausführungsformen bekannt. Die Dicht- und Montageschäume werden dabei aus einer Prepolymerkomponente auf Polyisocyanatbasis und einer Härterkomponente, die zur Vernetzung der Polyisocyanatgruppen der Prepolymerkomponente führt, gebildet. Zumeist besteht die Prepolymerkomponente aus einem Polyisocyanat auf Basis von MDI (Diphenylmethandiisocyanat), TDI (Toluoldiisocyanat) oder HDI (Hexamethylendiisocyanat), das mit einem Polyol, etwa einem Polyetherpolyol oder einem Polyesterpolyol, umgesetzt wurde, wobei im Prepolymer reaktive Isocyanatgruppen verleiben. Als Härter wird beispielsweise ein Polyol eingesetzt, etwa ein Glykol, insbesondere Ethylenglykol. Dabei ist die Prepolymerkomponente in der eigentlichen Druckdose enthalten und die Härterkomponente in einem separaten Innenbehälter, der entweder vor Gebrauch in der Druckdose geöffnet wird oder aber über einen separaten Ventilmechanismus nach außen entleert wird. In letzterem Fall erfolgt die Vermischung von Prepolymer und Härter außerhalb der Druckdose, zumeist in einem Applikationsrohr.

Die Druckdose enthält neben dem Prepolymer noch Treibgas, das zum einen zur Ausbringung des Prepolymers aus der Druckdose und zum anderen zum Verschäumen dient. Hinzu kommen noch übliche Zusätze, wie Flammschutzmittel, Schaumstabilisatoren und Katalysatoren.

In dem Innenbehälter befindet sich der Härter, meist zusammen mit einem Katalysator. Wird der Innenbehälter in die Druckdose hinein geöffnet, kann ein Treibmittel entfallen. Wird der Innenbehälter über einen separates Ventil entleert, enthält der Innenbehälter auch Treibgas.

Zweikomponenten-Aerosoldosen, die einen Innenbehälter aufweisen, dessen Inhalt im Inneren der Druckdose freigesetzt wird und sich dort mit dem Prepolymer vermischt, haben den Nachteil, dass die dann einsetzende Reaktion die Ausbringung des Gemisches innerhalb einer kurzen Zeit erfordert. Die Mischung reagiert unter Erwärmung zu einem fertigen Polymer, dass nicht mehr ausgebracht werden kann. Der Zeitraum, in dem das Gemisch nach ausgebracht werden kann, beträgt maximal 20 min.

Die zeitliche Begrenzung lässt sich vermeiden, wenn die Druckdose und der Innenbehälter über separate Ventile verfügen, die gemeinsam ausgelöst werden können. In diesem Fall findet die Vermischung der beiden Komponenten erst außerhalb der Druckdose statt. Das Gemisch erhärtet außerhalb der Druckdose am Einsatzort. Die Druckdose selbst bleibt einsatzbereit, auch nach einer Teilentleerung bleibt der Inhalt der Druckdose wie auch der des Innenbehälters unverändert reaktiv.

Solche Druckdosen mit zwei Ventilen, wie beispielsweise in der EP 0 111 089 B1 beschrieben, sind an und für sich bekannt und haben sich bewährt. Ein Nachteil besteht allerdings darin, dass die damit erzeugten Schäume häufig nicht die ideale Zusammensetzung haben, weil die Ventile das exakte Mischungsverhältnis von Prepolymer und Härter nicht gewährleisten können. Dies spielt keine entscheidende Rolle, wenn die Ausbringungsrate der Härterkomponente so eingestellt ist, dass der Härter im Überschuss vorliegt und die freien Isocyanatgruppen des Prepolymers komplett absättigt. Ist allerdings ein Isocyanatüberschuss im ausgebrachten Gemisch gewünscht, muss die Ausbringrate der Härterkomponente begrenzt werden.

Andererseits ist es sinnvoll, für Prepolymer- und Härterkomponente identische Ventile zu verwenden, um eine gleichmäßige Auslösung zu gewährleisten.

DE 20 2009 013510 U1 offenbart Polyurethanschäume, hergestellt mittels Aerosoldose mit zwei Kammern, enthaltend jeweils Zusammensetzungen mit NCO-Prepolymer und Treibgas (Hauptkammer), sowie mit Polyol als Härter und Treibmittel (Innenkammer). Die Zusammenführung der genannten Zusammenssetzungen zur Schaumbildung erfolgt ausserhalb des Behälters.

Ein weiteres Problem ist die Tendenz der so erzeugten Schäume, nach der Ausbringung am Einsatzort zu schrumpfen. Die Schrumpfung beträgt zwar nur wenige Volumenprozente, kann aber dort, wo es auf Dichtigkeit ankommt, einen großen Nachteil darstellen.

Wünschenswert wäre es deshalb, über eine Zweikomponenten-Aerosoldose und einen Montageschaum zu verfügen, die zum einen die Ausbringrate der beiden Komponenten präzise steuern und zum andern das Schrumpfen des fertigen Schaums verhindern.

Diese Aufgabe wird mit einer Aerosoldose der eingangs genannten Art gelöst, bei der die zweite Ventileinrichtung oder der zweite Kanal ein Drosselelement aufweist, das die Ausbringrate der Härterkomponente auf die der Prepolymerkomponente abstimmt, wobei die Härterkomponente nicht ausreicht, die Isocyanatgruppen der Prepolymerkomponente abzusättigen, dergestalt, dass in dem ausgebrachten Gemisch aus Prepolymerkomponente und Härterkomponente ein Isocyanatüberschuss von mehr als 3 Gew.-%, bezogen auf das Gewicht des Gemisches, vorliegt.

Unter Isocyanatüberschuss wird der gewichtsmäßige Anteil der Isocyanatgruppe am Gewicht des ausgebrachten Gemisches verstanden.

Die in der erfindungsmäßen Aerosoldose zum Einsatz kommenden Prepolymeren, sind solche auf üblicher Basis, wie sie beispielsweise aus MDI (Diphenylmethandiisocyanat) und Polyetherpolyol hergestellt werden. Wichtig ist dabei der Überschuss an freien NCO-Gruppen, der beispielsweise im Bereich vom 15 bis 20 Gew.-%, bezogen auf das Prepolymer, beträgt. Das Prepolymer ist in dem äußeren Druckbehälter der Aerosoldose enthalten und mit Treibgas versetzt, beispielsweise mit 1,1-Difluorethan (R152a), 1,1,2,2-Tetrafluorethan (R134a), Propan, Butan oder Dimethylether. Es können auch Treibgasgemische verwandt werden, etwa Propan/Butan/Dimethylether, gegebenenfalls unter Zusatz von R152a und/oder R134a. Der äußere Druckbehälter kann darüber hinaus übliche Zusatzstoffe enthalten, beispielsweise Schaumstabilisatoren, Flammschutzmittel, Katalysatoren und dergleichen.

Die Härterkomponente befindet sich im inneren Behälter und enthält ein Polyol, etwa Glykol oder Diethylenglykol. Zusätzlich ist ein die Vernetzung mit dem Prepolymer bewirkender üblicher Katalysator vorhanden sowie Treibgas. Es kann sinnvoll sein, der Härterkomponente einen Farbstoff zuzusetzen, der im ausgebrachten Produkt die Aktivierung des Innenbehälters anzeigt.

Vorzugsweise enthält der Innenbehälter das gleiche Treibgas wie der äußere Druckbehälter und weist dementsprechend den gleichen Druck auf. Sofern der Innenbehälter aus einem Polyolefin besteht, was bevorzugt ist, findet auch automatisch ein Treibgasaustausch und ein Druckausgleich durch die Wandung statt.

Der äußere Druckbehälter ist über ein erstes Ventil mit dem ersten Kanal im Sprühkopf der Aerosoldose verbunden, wobei der erste Kanal in ein Sprührohr einmündet.

Der Innenbehälter ist über ein separates zweites Ventil mit dem zweiten Kanal im Sprühkopf der Aerosoldose verbunden. Die beiden Ventile befinden sich dabei in einer Ventilplatte, die im Dom der Dose gasdicht angeordnet ist. Der Innenbehälter ist dabei an der Unterseite der Ventilplatte unterhalb des zweiten Ventils gasdicht montiert. Beispielhaft wird auf die EP 0 111 089 verwiesen. Die Anordnung beider Ventile in der Ventilplatte erlaubt die simultane Auslösung.

Der Sprühkopf enthält gleichzeitig eine Einrichtung zur simultanen Betätigung der beiden Ventile. Der Sprühkopf ist hierzu vertikal beweglich auf die Ventilplatte aufgesetzt und vermag die Ventile zur Auslösung mit Hilfe der im Ventilkopf angeordneten Kanäle einzudrücken, die den oberen Rand des Stents eines jeden Ventils umgreifen. Die beiden Kanäle münden in ein Sprührohr, in dem die Vermengung der beiden Komponenten stattfindet. Die Ventile haben in bekannter Weise einen vertikal beweglichen Stem, der auf Druck den Ventilweg frei gibt.

Aus Kostengründen und um eine gleichmäßige Öffnung zu ermöglichen, sind das erste und das zweite Ventil identisch ausgebildet. Da aber die Ausbringrate der Härterkomponente gegenüber der der Prepolymerkomponente geringer sein muss - das Mengenverhältnis von Prepolymerkomponente zu Härterkomponente liegt im Bereich von 15 zu 1 bis zu 5 zu 1 und beträgt insbesondere etwa 10 zu 1 - befindet sich im Ausbringweg der Härterkomponente, zweckmäßigerweise im zweiten Kanal, ein Drosselelement. Als Drossel kann beispielsweise ein geringerer Querschnitt des zweiten Kanals dienen, eine Verengung im zweiten Kanal, ein Dorn, der den Austritt im zweiten Ventil partiell verschließt oder auch ein längerer Weg des zweiten Kanals im Vergleich zum ersten Kanal. Eine Vermischung der beiden Komponenten findet dann erst im Sprührohr statt, der zur Herstellung einer homogenen Mischung mit einem Zwangsmischelement, etwa einem Statikmischer, ausgestattet sein kann. Hierfür geeignete Zwangsmischer sind an und für sich bekannt. Eine ausreichende Vermischung kann aber auch ohne Zwangsmischer erzielt werden.

Wesentlich für die Erfindung ist ein Restgehalt an Isocyanat in der ausgebrachten Mischung. Dieser Restgehalt sollte mehr als 3 Gew.-% bezogen auf das Gemisch inklusive Treibgas, und insbesondere 5 bis 13 Gew.-% betragen. Bevorzugt ist ein Isocyanatüberschuss von 10 bis 12 Gew.-%.

Der Überschuss an freiem Isocyanat in der ausgebrachten Mischung bewirkt unter dem Einfluss von Feuchtigkeit, insbesondere von Luftfeuchtigkeit, eine Nachexpansion des Schaums, sodass sich dieser in Fugen und Öffnungen besonders gut an die Wandungen anschmiegt. Bei reaktiven Oberflächen erfolgt eine reaktive Anbindung des Dichtschaums. Bei glatten Oberflächen, die keinen guten Halt bieten, kann die Anwendung eines Primers sinnvoll sein. Aus diesem Grunde lässt sich der erfindungsgemäß erzeugte Dicht- und Montageschaum besonders gut zur Dichtung von Fugen und Öffnungen einsetzen. Dabei entstehen wasserdichte Verschlüsse mit einer Druckfestigkeit von mehr als 1,5 bar.

Der Schaum kann beispielsweise zur wasserfesten Abdichtung von Rohren (insbesondere stillgelegten Rohren in Gebäuden), von Durchführungen, Schachtringen, Brunnenaufsätzen sowie Tür- und Fensteranschlussfugen eingesetzt werden. Eine bevorzugte Anwendung ist der Verschluss von Leerrohren, die (beispielsweise in Neubauten) zur Aufnahme von Kabelsträngen und dergleichen verlegt und eingebaut werden.

Im Prüfverfahren wurden Rohrverschlüsse mit erfindungsgemäß ausgebrachten Dichtschäumen bei 1,5 bar getestet. Die Verschlüsse erwiesen sich über weit mehr als 120 h als luft- und wasserdicht.

## Patentansprüche

1. Zweikomponenten-Aerosdoldose zur Ausbringung von Dicht- und Montageschäumen auf Basis von Isocyanaten mit
einem äußeren Druckbehälter, der eine Prepolymerkomponente und ein Treibgas enthält, wobei der äußere Druckbehälter mit einer ersten Ventileinrichtung und einem ersten Kanal verbunden ist,
einem inneren Behälter, der eine Härterkomponente und ein Treibgas enthält, wobei der innere Behälter mit einer zweiten Ventileinrichtung und einem zweiten Kanal verbunden ist und
einem Sprühkopf, der eine Einrichtung zur simultanen Betätigung der ersten und zweiten Ventileinrichtung aufweist sowie einem Sprührohr, in das der erste und zweite Kanal gemeinsam einmündet, **dadurch gekennzeichnet, dass** die zweite Ventileinrichtung oder der zweite Kanal ein Drosselelement aufweist, das die Ausbringrate der Härterkomponente auf die der Prepolymerkomponente abstimmt, wobei die Härterkomponente nicht ausreicht, die Isocyanatgruppen der Prepolymerkomponente abzusättigen dergestalt, dass in dem ausgebrachten Gemisch aus Prepolymerkomponente und Härterkomponente ein Isocyanatüberschuss von mehr als 3 Gew.-%, bezogen auf das Gewicht des Gemisches, vorliegt.

2. Aerosoldose nach Anspruch 1, **dadurch gekennzeichnet, dass** das Drosselelement in den zweiten Kanal integriert ist.

3. Aerosoldose nach Anspruch 1 oder 2, **dadurch gekennzeichnet, dass** der Überschuss an Isocyanatgruppen 5 bis 13 Gew.-% beträgt.

4. Aerosoldose nach Anspruch 3, **dadurch gekennzeichnet, dass** der Isocyanatüberschuss im Gemisch 8 bis 12 Gew.-% beträgt.

5. Aerosoldose nach einem der vorstehenden Ansprüche, **dadurch gekennzeichnet, dass** der äußere Druckbehälter und der innere Behälter das gleiche Treibgas enthält.

6. Aerosoldose nach Anspruch 5, **dadurch gekennzeichnet, dass** das Treibgas 1,1-Difluorethan (R152a), Tetrafluorethan (R134a), Propan, Butan, Dimethylether oder eine Mischung wenigstens zweier dieser Treibgase ist.

7. Aerosoldose nach einem der vorstehenden Ansprüche, **dadurch gekennzeichnet, dass** der Sprühkopf einen Zwangsmischer aufweist.

8. Aerosoldose nach Anspruch 7, **dadurch gekennzeichnet, dass** das Sprührohr als Zwangsmischer ausgebildet ist.

9. Verwendung einer Aerosoldose nach einem der Ansprüche 1 bis 8 zur druckfesten Abdichtung von Fugen und Öffnungen mit Dichtschaum gegen Wasserdurchtritt.

10. Verwendung nach Anspruch 9 **dadurch gekennzeichnet, dass** die Fugen und Öffnungen einem Überdruck von wenigstens 1,5 bar standhalten.

11. Verwendung nach Anspruch 9 oder 10 zur Abdichtung von Leerrohren zur Kabelverlegung.

12. Verwendung nach Anspruch 9 oder 10 zur Abdichtung von Rohren gegen Wasserein- oder -austritt.

## Claims

1. A two-component aerosol can for dispensing sealing and assembly foams based on isocyanates, having
an outer pressure container which holds a prepolymer component and a propellant gas, the outer pressure container being in communication with a first valve device and with a first channel,
an inner container which holds a curing component and a propellant gas, the inner container being in communication with a second valve device and with a second channel, and
a spray head which comprises a device for simultaneously actuating the first and second valve devices, and also a spray tube into which the first and second channels jointly open,
**characterized in that**
the second valve device or the second channel comprises a throttle element which tailors the dispensing rate of the curing component to that of the prepolymer component, the curing component being not sufficient to satisfy the isocyanate groups of the prepolymer component, such that in the mixture of prepolymer component and curing component dispensed there is an isocyanate excess of more than 3 wt%, based on the weight of the mixture.

2. The aerosol can as claimed in claim 1, **characterized in that** the throttle element is integrated in the second channel.

3. The aerosol can as claimed in claim 1 or 2, **characterized in that** the excess of isocyanate groups is 5 to 13 wt%.

4. The aerosol can as claimed in claim 3, **characterized in that** the isocyanate excess in the mixture is 8 to 12 wt%.

5. The aerosol can as claimed in any of the preceding claims, **characterized in that** the outer pressure container and the inner container hold the same propellant gas.

6. The aerosol can as claimed in claim 5, **characterized in that** the propellant gas is 1,1-difluoroethane (R152a), tetrafluoroethane (R134a), propane, butane, dimethyl ether, or a mixture of at least two of these propellant gases.

7. The aerosol can as claimed in any of the preceding claims, **characterized in that** the spray head comprises a forced mixer.

8. The aerosol can as claimed in claim 7, **characterized in that** the spray tube is designed as a forced mixer.

9. The use of an aerosol can as claimed in any of claims 1 to 8 for the pressure-resistant sealing of joints and openings with sealing foam against passage of water.

10. The use as claimed in claim 9, **characterized in that** the joints and openings withstand an overpressure of at least 1.5 bar.

11. The use as claimed in claim 9 or 10 for sealing empty pipes for cable laying.

12. The use as claimed in claim 9 or 10 for sealing pipes against ingress or egress of water.

## Revendications

1. Bombe aérosol à deux composants pour appliquer des mousses denses et expansives à base d'isocyanates, comportant
un récipient sous pression extérieur, qui contient un composant prépolymère et un gaz propulseur, le récipient sous pression extérieur étant relié à un premier dispositif de soupape et à un premier canal,
un récipient intérieur, qui contient un composant durcisseur et un gaz propulseur, le récipient intérieur étant relié à un second dispositif de soupape et à un second canal et
une tête de pulvérisation, qui comprend un dispositif pour l'actionnement simultané du premier et du second dispositifs de soupape ainsi qu'un tube de pulvérisation, dans lequel débouchent simultanément le premier canal et le second canal, **caractérisée en ce que** le second dispositif de soupape ou le second canal comprend un élément d'étranglement, qui ajuste le débit d'application du composant durcisseur à celui du composant prépolymère, le composant durcisseur ne suffisant pas à saturer les groupes isocyanate du composant prépolymère, de telle sorte que, dans le mélange appliqué du composant prépolymère et du composant durcisseur, on ait un excès d'isocyanate supérieur à 3 % en poids par rapport au poids du mélange.

2. Bombe aérosol selon la revendication 1, **caractérisée en ce que** l'élément d'étranglement est intégré dans le second canal.

3. Bombe aérosol selon la revendication 1 ou 2, **caractérisée en ce que** l'excès de groupes isocyanate est de 5 à 13 % en poids.

4. Bombe aérosol selon la revendication 3, **caractérisée en ce que** l'excès d'isocyanate dans le mélange est de 8 à 12 % en poids.

5. Bombe aérosol selon l'une des revendications précédentes, **caractérisée en ce que** le récipient sous pression extérieur et le récipient intérieur contiennent le même gaz propulseur.

6. Bombe aérosol selon la revendication 5, **caractérisée en ce que** le gaz propulseur est le 1,1-difluoroéthane (R152a), le tétrafluoréthane (R134a), le propane, le butane, le diméthyléther ou un mélange d'au moins deux de ces gaz propulseurs.

7. Bombe aérosol selon l'une des revendications précédentes, **caractérisée en ce que** la tête de pulvérisation comprend un mélangeur à mélange forcé.

8. Bombe aérosol selon la revendication 7, **caractérisée en ce que** le tube de pulvérisation est conçu comme un mélangeur à mélange forcé.

9. Utilisation d'une bombe aérosol selon l'une des revendications 1 à 8 pour étancher contre un passage d'eau, avec résistance à la compression, des joints et des ouvertures avec une mousse dense.

10. Utilisation selon la revendication 9, **caractérisée en ce que** les joints et les ouvertures résistent à une surpression d'au moins 1,5 bar.

11. Utilisation selon la revendication 9 ou 10 pour étancher des gaines destinées à la pose de câbles.

12. Utilisation selon la revendication 9 ou 10 pour étancher des tubes contre la pénétration ou la sortie d'eau.
